# NEUE EUROPÄISCHE PATENTSCHRIFT

(11) **EP 0 616 124 B2**
(45) Veröffentlichungstag und Bekanntmachung des Hinweises auf die Entscheidung über den Einspruch: **21.06.2000**
(45) Hinweis auf die Patenterteilung: 30.07.1997
(21) Anmeldenummer: 94104365.5
(22) Anmeldetag: 19.03.1994
(51) Int. Cl.: F02F 11/00, F16J 15/12

(54) **Mehrlagenmetalldichtung für Verbrennungskraftmaschinen**
Multi-layered cylinderhead gasket for an internal combustion engine
Joint de culasse à plusieurs couches pour un moteur à combustion interne

(30) Priorität: 19.03.1993 DE 4308820
(43) Veröffentlichungstag der Anmeldung: 21.09.1994
(73) Patentinhaber: Elring Klinger GmbH, 72581 Dettingen (DE)
(72) Erfinder: Walter, Gerhard, D-72581 Dettingen (DE); Griesinger, Eberhard, D-72574 Bad Urach (DE); Eckert, Dieter, D-73207 Plochingen (DE)
(74) Vertreter: Hoeger, Stellrecht & Partner

(56) Entgegenhaltungen:
- EP-A- 0 164 940
- WO-A-92/19892
- DE-A- 3 500 071
- FR-A- 2 253 149
- GB-A- 2 182 731
- JP-U- 5 787 144
- US-A- 5 032 430
- "Die Zylinderkopfdichtung in der Patentliteratur", Erika Fleischer, in der MTZ 3/9/12/1987, Teil III, Seiten 17-24
- Schmid, E. et al., "Handbuch der Dichtungstechnik", Expert Verlag, Grafenau, 1981, S. 89-99

## Beschreibung

Die Erfindung betrifft eine weichstoffauflagenfreie Mehrlagenmetalldichtung für Verbrennungskraftmaschinen mit einer metallischen Trägerlage, welche Durchbrüche im Bereich von Motorbrennräumen sowie Kühl-und Schmiermitteldurchgängen aufweist, sowie mit einer oberhalb und einer unterhalb der Trägerlage angeordneten, metallischen Dichtungslage zum Abdichten der Brennräume sowie der Kühl- und Schmiermitteldurchgänge.

Bei derartigen Mehrlagenmetalldichtungen sind die aus Metall bestehenden Dichtungslagen vollflächig ausgebildet und mit Sicken versehen, um Flüssigkeitsdurchgänge der Dichtung abzudichten.

Für die Abdichtung der Brennräume werden teilweise gesonderte Dichtungsmaßnahmen ergriffen, und insgesamt sind relativ hohe Schraubenkräfte notwendig, um die erforderliche Pressung am Brennraumrand zu dessen Abdichtung sowie an den Halbsicken zum Abdichten der Flüssigkeitsdurchgänge zu erreichen.

Weiterhin sind Mehrlagendichtungen in Form von sogenannten Weichstoffdichtungen bekannt. Beispielsweise beschreibt die FR-A-2 253 149 eine Weichstoffdichtung, bei der oberhalb und unterhalb einer metallischen Trägerlage jeweils eine vollflächige Dichtungslage mit metallischen Steg- und Ringelementen im Bereich von Brennraumdurchbrüchen und Kühl- und Schmiermitteldurchgängen angeordnet ist. Als Dichtungsmaterial ist beispielsweise Asbest, Aluminiumoxid, Zirkoniumoxid oder Graphit vorgesehen. Im eingebauten Zustand nehmen die Steg- und Ringelemente einen Teil der auf die Dichtung wirkenden Preßkräfte auf und schützen das abdichtende Material sowohl vor einer übermäßigen Pressung als auch vor der unmittelbaren Einwirkung der abzudichtenden Medien, wie heißer Brennraumgase. Die Dichtwirkung wird im wesentlichen durch das vollflächig sowohl an der Trägerlage als auch an einer entsprechenden Gegenfläche, wie einer Zylinderkopffläche, anliegende Dichtungsmaterial erreicht.

Bei einer anderen, aus der WO-A-92/19892 bekannten Weichstoffdichtung für einen Zylinderkopf ist ein metallischer Kern beidseitig mit einer Weichstofflage zur Abdichtung beschichtet. Hierbei sind Brennraumdurchbrüche der Dichtung jeweils am Brennraumrand mit einem metallischen Dichtring versehen, der von Teflonband gehalten ist. In einer Ausführungsvariante ist beabstandet zu den abzudichtenden Durchbrüchen auf einer oder beiden Seiten ein dünnes Band aus einem zweiten Dichtungsmaterial aufgelegt.

Bei diesen Weichstoffdichtungen ist die Herstellung aufwendig. Eine zufriedenstellende Abdichtung erfordert verhältnismäßig hohe, auf die Dichtung wirkende Preßkräfte. Weiterhin ist nachteilig, daß die eingesetzten Abdichtungsmaterialien die Hitzebeständigkeit der Dichtungen begrenzen.

Aus der JP-U-57-87 144 ist eine Mehrlagenmetalldichtung mit mehreren Trägerlagen und einer Dichtungslage bekannt, wobei die Dichtungslage eine Vielzahl von Steg-und Ringelementen umfaßt. Die Dichtungslage ist durch einen hochgestellten Rand einer Trägerlage am Brennraumrand geschützt.

Aufgabe der Erfindung ist es, ausgehend von der eingangs beschriebenen Mehrlagenmetalldichtung die Dichtung so zu verbessern, daß mit einer reduzierten Schraubenkraft eine erhöhte Pressung am Brennraumrand erzielbar ist.

Diese Aufgabe wird durch eine weichstoffauflagenfreie Mehrlagenmetalldichtung gemäß Anspruch 1 gelöst.

Das vorliegende Konzept des Aufbaus einer Mehrlagenmetalldichtung wendet sich vollständig von der bisherigen Bauweise ab und reduziert die bislang üblichen vollflächigen Metallagen auf Steg- und Ringelemente, soweit diese notwendig sind, um die gewünschte Abdichtung zu erzielen. Aus der vollflächigen Dichtungsmetallage wird so eine Art Brille, die nur noch die früheren gesickten Bereiche abdeckt und gegebenenfalls wenige weitere Stege umfaßt, die Einzelelemente der Dichtungslage miteinander verbinden. Dadurch kann eine beträchtliche Reduzierung der Auflagefläche von Zylinderkopf und Motorblock an der montierten Dichtung erzielt werden, aufgrund dessen eine Reduzierung der Schraubenkräfte möglich wird. Trotz reduzierter Schraubenkräfte ist es noch möglich, am Brennraumrand, d.h. der kritischsten Stelle einer Zylinderkopfdichtung, eine höhere Pressung zu erzielen, als bislang mit höheren Schraubenkräften möglich. Damit ist auch die Möglichkeit eröffnet, einfache Konstruktionen für die Brennraumabdichtung zu nutzen. Diese werden u.a. im folgenden näher beschrieben.

Die Dichtungslagen umfahren die Schmiermittel- und Kühlwasserdurchgänge großräumig (in sogenannten Wassernieren) und vermindern dabei merklich die Probleme des Ablösens von Teilen der Elastomerfilmbeschichtungen oder beseitigen diese sogar vollständig.

Die wird Dichtungslage einer Mehrlagenmetalldichtung wird so ausgeführt, daß alle Steg- und Ringelemente miteinander verbunden sind, so daß die Dichtungslage einstückig ist. Diese läßt sich dann besonders einfach und kostensparend aus einem Metallblech ausstanzen und als einzelnes Bauelement in der Montage auf die Trägerlage aufbringen und befestigen.

Gemäß der Erfindung sind an die Dichtungslagen Brennraumeinfassungen angeformt, d.h. die einstückige Dichtungslage beinhaltet nicht nur die Abdichtelemente für die Kühl- und Schmiermittelströme, sondern ebenso die Dichtelemente, um die Brennräume gegenüber dem Hinterland der Dichtung gasdicht abzudichten.

Bei der Art der Ausführung der Brennraumeinfassungen kann auf zwei prinzipiell alternative Ausführungsformen zurückgegriffen werden, wobei bei einer ersten Ausführungsform die Brennraumeinfassungen um die brennraumseitige Kante der Trägerlage umgebördelt sind.

Alternativ hierzu kann vorgesehen sein, daß die Brennraumabdichtungen oberhalb und unterhalb der Trägerlage mit ihren brennraumseitigen Kanten mit der entsprechenden Kante der Trägerlage fluchtend angeordnet sind und eine zum Brennraum hin offene Sandwichstruktur bilden. Dies bedeutet, die Kanten der Trägerlage sowie der Brennraumabdichtungen als Teil der Dichtungslagen liegen zum Brennraum hin offen. Erstaunlicherweise zeigt sich, daß auch diese "offene" Sandwichstruktur der Metallagendichtung rund um die Brennräume herum eine ausgezeichnete Gasdichtheit ermöglicht, wobei dieser Konstruktion höherer Pressungsdruck als nach dem Stand der Technik üblich entgegenkommt. Dies ist jedoch mit den erfindungsgemäßen Mehrlagenmetalldichtungen problemlos möglich, da insgesamt geringere Schraubenkräfte verwendet werden und trotzdem eine höhere Verpressung im Bereich der Brennraumabdichtung möglich wird. Dies bedeutet, daß mit der Bemessung der Schraubenkräfte auf die Motorkonstruktion Rücksicht genommen werden kann, die nur bestimmte Schraubenkräfte zuläßt, wenn nicht die Gefahr des Verziehens von Zylinderkopf und/oder Motorblockteilen bestehen soll.

Diese Ausgestaltung der Brennraumabdichtung hat den Vorteil, daß eine Zwickelbildung an der Kontaktstelle der Metalldichtung zum Zylinderkopf vermieden ist und damit eine Schadraumreduzierung erzielt wird. Die Schadgasemission, die bei Motoren mit solchen Dichtungen beobachtet wird, ist merklich geringer als bei Verwendung von konventionellen Dichtungen.

Obwohl bereits plane Dichtungslagen entlang der Linien ausreichend sein können, um ausreichende Dichtheit zu gewährleisten, wird in vielen Fällen die Dichtungslage entlang der die Brennraumdurchbrüche sowie die Kühl- und Schmiermitteldurchgänge umfangenden Linien gesickt sein. Hierbei reichen häufig Halbsicken aus.

Bei jeder der zuvor beschriebenen Ausführungsformen wird eine weitere Steigerung der Dichtwerte der Dichtung beobachtet, wenn die Trägerlage und/oder die Dichtungslagen mindestens einseitig mit einem Elastomerfilm beschichtet sind, so daß bei der aus Trägerlage und Dichtungslagen zusammengesetzten Dichtung zwischen den einzelnen Lagen jeweils mindestens eine Elastomerfilmschicht angeordnet ist. Auch die mit dem Motorblock bzw. dem Zylinderkopf in Kontakt stehenden Oberflächen der Dichtung tragen bevorzugt eine Elastomerfilmbeschichtung. Vorteilhafterweise werden die Dichtungslagen doppelseitig beschichtet, wobei dann die Trägerlage unbeschichtet bleiben kann.

Als Elastomer zur Beschichtung der Träger- und/oder Dichtungslagen können auch teure Elastomermaterialien, wie z.B. Fluorelastomere, ohne merkliche Kostennachteile verwendet werden, da aufgrund der geringen zu beschichtenden Flächen, insbesondere bei den Dichtungslagen, nur geringe Mengen des Elastomermaterials für eine vollflächige Beschichtung ausreichen.

In den Fällen, in denen die Brennraumeinfassungen um die brennraumseitige Kante der Trägerlage umgebördelt sind, reicht das Umbördeln als Verheftung der Dichtungslage mit der Trägerlage aus, um diese gegeneinander so zu stabilisieren, daß sie zur Montage der Zylinderkopfdichtung keine weitere Stabilisierung benötigen.

Zusätzlich oder alternativ kann auch ein Umbördeln um Schraubendurchgangslöcher dem Verheften von Träger- und Dichtungslagen dienen.

Insbesondere in den Fällen, in denen nicht beide Dichtungslagen über ein Umbördeln der Brennraumeinfassungen um die Trägerlage gegenüber der Trägerlage stabilisiert werden können, wird empfohlen, die einzelnen Lagen miteinander in Bereichen zu verbinden, in denen keine Dichtwirkung erzeugt wird und in denen im eingebauten Zustand keine Pressung auftritt. Eine solche Verbindung der Lagen miteinander kann auf vielfältige Weise geschehen, wobei eine besonders geeignete, weil kostensparende Art der Verbindung im Durchsetzfügen gegeben ist (vgl. H.P. Liebig und D. Göpfert in JOT 5/92). Wichtig ist bei diesem Verfahren, daß im Fügebereich weitergeschnitten wird.

Diese und weitere Vorteile der Erfindung werden im folgenden anhand der Zeichnung noch näher erläutert. Es zeigen im einzelnen:

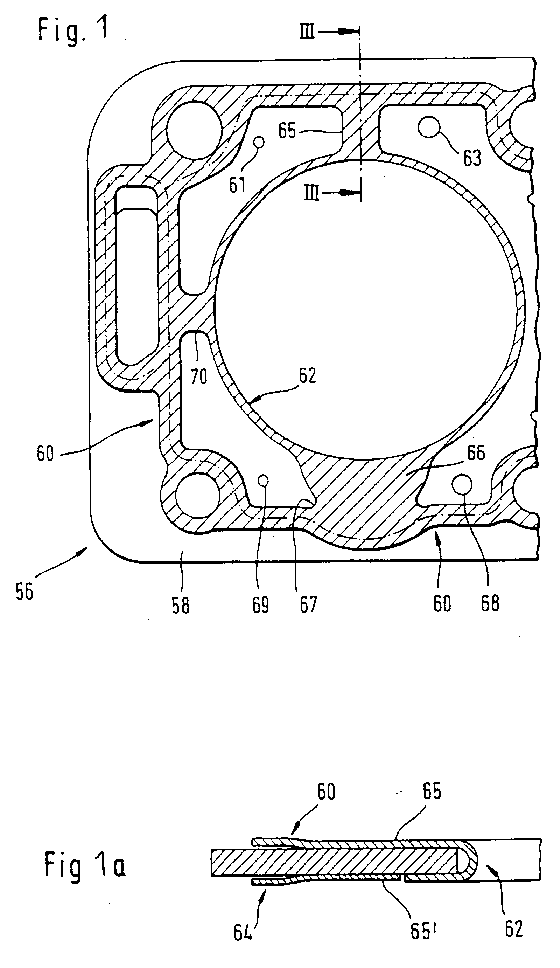

- Fig. 1: eine teilweise Draufsicht auf eine weitere. Ausführungsform der Erfindung;
- Fig. 1a: eine Schnittansicht längs Linie III-III in Figur 1.

Figur 1 zeigt eine Ausführungsform der Erfindung, bei der bei einer Zylinderkopfdichtung 56 mit einer Trägerlage 58 eine Dichtungslage 60 nicht nur Steg- und Ringelemente aufweist, sondern einstückig über einen Steg 65 angeformt auch noch die Brennraumeinfassung 62. Diese einstückige Ausbildung von Brennraumeinfassung 62 mit Dichtungsabschnitten 60 erleichtert die Montage und die Handhabung sehr. Auf der der Dichtungslage 60 gegenüberliegenden Seite der Trägerlage 58 ist eine weitere Dichtungslage 64 angeordnet. Um zu einer ausreichenden Dichtpressung am Brennraumrand zu kommen, wird das Material der Dichtungslage 60 einschließlich des um die brennraumseitige Kante der Trägerlage 58 umgebördelten Teil der Brennraumeinfassung 62 aus einem etwas stärkeren Material gebildet als das Material der untenliegenden Dichtungslage 64. Ausreichend sind hier Dickenabweichungen von ca. 0,1 mm.

Ebenfalls ist im Schnitt der Figur 1a gezeigt, daß die Dichtungslage 64, obwohl diese keine Stegverbindung zur Brennraumeinfassung 62 benötigt, einen Steg 65' angeformt in Form eines Vorsprungs aufweist, der bis nahe an die Brennraumeinfassung 62 reicht und im wesentlichen deckungsgleich mit dem Steg 65 ausgebildet ist. Die Stege 65 und 65' sorgen dafür, daß die durch die Kühlmitteldurchgänge 61, 63 durchtretenden Flüssigkeitsströme getrennt bleiben und keine unerwünschten Ausweichströmungen auftreten können. Die Darstellung in Figur 1a entspricht dem nicht-verpreßten Zustand der Dichtung 56.

Dasselbe trifft auf der gegenüberliegenden Seite zu, wo einerseits die die Wirbelkammer abdeckende Verbreiterung 66 der Brennraumeinfassung über einen Steg 67 mit der Dichtungslage 60 verbunden ist. Auf der entsprechenden Unterseite der Dichtung (nicht gezeigt) erstreckt sich ebenfalls ein Steg von der Dichtungslage 64 bis zum Brennraumrand, so daß auch hier die durch die Kühlmitteldurchgänge 68, 69 durchtretenden Flüssigkeitsströme getrennt bleiben. Der dem Steg 67 und der Verbreiterung 66 auf der Unterseite der Dichtung gegenüberliegende Steg (nicht gezeigt) weist vorzugsweise eine ähnliche Gestalt auf wie der Steg 67 und die Verbreiterung zusammengenommen.

Die Flüssigkeitsströme durch die Kühlmitteldurchgänge 61 und 69 sind bei der vorliegenden Ausführungsform der Erfindung ebenfalls oberhalb und unterhalb der Trägerlage 58 jeweils durch Stege 70 getrennt, wovon einer die Dichtungslage 60 mit der Brennraumeinfassung 62 verbindet und der andere einen von der Dichtungslage 64 zur Brennraumeinfassung vorstoßenden Vorsprung (nicht gezeigt) bildet.

## Patentansprüche

1. Weichstoffauflagenfreie Mehrlagenmetalldichtung (56) für Verbrennungskraftmaschinen mit einer metallischen Trägerlage (58), welche Durchbrüche im Bereich von Motorbrennräumen sowie Kühl- und Schmiermitteldurchgängen aufweist, sowie mit einer oberhalb und einer unterhalb der Trägerlage (58) angeordneten, metallischen Dichtungslage (60,64) zum Abdichten der Brennräume sowie der Kühl- und Schmiermitteldurchgänge (61, 63, 68, 69), wobei die Dichtungslagen (60,64) im wesentlichen aus einer aus Metallblech hergestellten Vielzahl von mit einander verbundenen, einstückige Dichtungslagen bildenden Steg- und Ringelementen (65,65', 66, 67, 70) bestehen, welche entlang von in sich geschlossenen Linien gebildet und so angeordnet sind, daß sie die Brennraumdurchbrüche sowie die Kühl- und Schmiermitteldurchgänge (61, 63, 68, 69) umfangen, wobei an die Dichtungslagen (60,64) Brennraumeinfassungen (62) angeformt sind und wobei gegebenenfalls die Trägerlage (58) und/oder die Dichtungslagen (60,64) mindestens einseitig mit einem Elastomerfilm beschichtet sind.

2. Mehrlagenmetalldichtung nach Anspruch 1, dadurch gekennzeichnet, daß die Brennraumeinfassung (62) um die brennraumseitige Kante der Trägerlage (58) umgebördelt ist.

3. Mehrlagenmetalldichtung nach Anspruch 1, dadurch gekennzeichnet, daß die Brennraumabdichtung mit ihrer brennraumseitigen Kante mit der entsprechenden Kante der Trägerlage (58) fluchtet und eine zum Brennraum hin offene Sandwichstruktur bildet.

4. Mehrlagenmetalldichtung nach einem der Ansprüche 1 bis 3, dadurch gekennzeichnet, daß die Dichtungslagen (60,64) entlang der die Brennraumdurchbrüche sowie die Kühl- und Schmiermitteldurchgänge umfangenden Linien () gesickt sind.

5. Mehrlagenmetalldichtung nach einem der Ansprüche 1 bis 4, dadurch gekennzeichnet, daß die Trägerlage (58) und/oder die Dichtungslagen (60,64) mindestens einseitig mit einem Elastomerfilm beschichtet sind, so daß bei der aus Trägerlage (58) und Dichtungslagen (60,64) zusammengesetzten Dichtung (56) zwischen den einzelnen Lagen jeweils mindestens eine Elastomerfilmschicht angeordnet ist.

6. Mehrlagenmetalldichtung nach einem der voranstehenden Ansprüche, dadurch gekennzeichnet, daß die einzelnen Lagen miteinander in Bereichen verbunden sind, in denen keine Dichtung erzeugt wird und in denen keine Pressung im eingebauten Zustand auftritt.

7. Mehrlagenmetalldichtung nach Anspruch 6, dadurch gekennzeichnet, daß die Lagen mittels Durchsetzfügen miteinander verbunden sind.

## Claims

1. Multilayer metal gasket (56), free from soft-material layers, for combustion engines with a metal support layer (58), which shows holes in the area of the engine combustion chambers and coolant and lubricant passages and with a metal sealing layer (60, 64) arranged above and below the support layer (58) for sealing the combustion chambers and the coolant and lubricant passages (61, 63, 68, 69), whereby essentially the sealing layers (60, 64) comprise a number of sheet-metal linking and ring elements (65, 65', 66, 70) which are linked together to form single-piece sealing layers which are formed along closed loop lines and arranged such that they surround the holes for the combustion chambers and the coolant and lubricant passages (61, 63, 68, 69), whereby combustion chamber surrounds (62) are formed together with the sealing layers (60, 64) and whereby the support layer (58) and/or the sealing layers (60, 64) are, where necessary, coated on at least one side with elastomer film.

2. Multilayer metal gasket according to Claim 1, characterised in that the combustion chamber surround (62) around the edge of the support layer (58) is flanged on the combustion chamber side.

3. Mulilayer metal gasket according to Claim 1, characterised in that the edge of the combustion chamber seal on the combustion chamber side is flush with the corresponding edge of the support layer (58) and forms a sandwich structure open towards the combustion chamber.

4. Multilayer metal gasket according to Claims 1 to 3, characterised in that the sealing layers (60, 64) are beaded along the lines surrounding the holes for the combustion chambers and the coolant and lubricant passages.

5. Multilayer metal gasket according to one of Claims 1 to 4, characterised in that the support layer (58) and/or the sealing layers (60, 64) are coated on at least one side with elastomer film such that, in the case of a gasket comprised of a support layer (58) and various sealing layers (60, 64), at least one coat of elastomer film is arranged between the individual layers in each case.

6. Multilayer metal gasket according to one of the preceding Claims, characterised in that the individual layers are linked together in those areas where no seal is created and where no compression occurs when installed.

7. Multilayer metal gasket according to Claim 6, characterised in that the layers are linked together by means of through joints.

## Revendications

1. Joint de culasse métallique (56) à plusieurs couches exempt de couches souples pour des moteurs à combustion interne, comportant une couche de support métallique (58) qui présente des traversées dans la région des chambres de combustion du moteur, ainsi que des passages pour le réfrigérant et pour le lubrifiant, et comportant une couche d'étanchement métallique (60, 64) agencée au-dessus et au-dessous de la couche de support (58), pour étancher les chambres de combustion ainsi que les passages pour réfrigérant et lubrifiant (61, 63, 68, 69), les couches d'étanchement (60, 64) étant constituées sensiblement par une multitude d'éléments de barrettes et d'éléments annulaires (65, 65', 66, 67, 70) réalisés en tôle métallique, qui sont reliés les uns aux autres en formant des couches d'étanchement d'une seule pièce, et qui sont formés le long de lignes refermées sur elles-mêmes et sont agencés de telle sorte qu'ils entourent les traversées de chambre de combustion et les passages de réfrigérant et de lubrifiant (61, 63, 68, 69), et dans lequel, sur les couches d'étanchement (60, 64) sont moulés des encadrements de chambre de combustion (62), et la couche de support (58) et/ou les couches d'étanchement (60, 64) sont le cas échéant revêtues du moins sur un côté d'un film élastomère.

2. Joint métallique à plusieurs couches selon la revendication 1, caractérisé en ce que l'encadrement de chambre de combustion (62) est rabattu autour de l'arête de la couche d'étanchement (58) côté chambre de combustion.

3. Joint métallique à plusieurs couches selon la revendication 1, caractérisé en ce que l'étanchement de chambre de combustion est en alignement par son arête côté chambre de combustion avec une arête correspondante de la couche de support (58) et forme une structure sandwich ouverte vers la chambre de combustion.

4. Joint métallique à plusieurs couches selon l'une quelconque des revendications 1 à 3, caractérisé en ce que les couches d'étanchement (60, 64) sont moulurées le long des lignes entourant les traversées de chambre de combustion et les passages de réfrigérant et de lubrifiant.

5. Joint métallique à plusieurs couches selon l'une quelconque des revendications 1 à 4, caractérisé en ce que la couche de support (58) et/ou les couches d'étanchement (60, 64) sont revêtues au moins sur un côté d'un film élastomère, de sorte que dans le joint (56) constitué par la couche de support (58) et par les couches d'étanchement (60, 64), au moins une couche de film élastomère est agencée entre les couches individuelles.

6. Joint métallique à plusieurs couches selon l'une quelconque des revendications précédentes, caractérisé en ce que les couches individuelles sont reliées les unes aux autres dans des régions dans lesquelles aucun étanchement n'est produit et dans lesquelles aucun pressage n'apparaît à l'état monté.

7. Joint métallique à plusieurs couches selon la revendication 6, caractérisé en ce que les couches sont reliées les unes aux autres au moyen d'un assemblage par pénétration.
